# EUROPÄISCHE PATENTSCHRIFT

(11) **EP 2 011 845 B1**
(45) Veröffentlichungstag und Bekanntmachung des Hinweises auf die Patenterteilung: **24.11.2010**
(21) Anmeldenummer: 08158420.3
(22) Anmeldetag: 17.06.2008
(51) Int. Cl.: C09J 7/04

(54) **Klebeband und Verwendung des Klebebandes als Bandagierungsband für Kabel**
Adhesive tape and use of the adhesive tape as bandaging tape for cables
Bande de collage et son utilisation en tant que bande de bandage pour câble

(30) Priorität: 04.07.2007 DE 102007031224
(43) Veröffentlichungstag der Anmeldung: 07.01.2009
(73) Patentinhaber: TESA SE, 20253 Hamburg (DE)
(72) Erfinder: Krawinkel, Thorsten, 22457, Hamburg (DE); Kopf, Dr. Patrik, 22417, Hamburg (DE); Wahlers-Schmidlin, Andreas, 21720, Guderhandviertel (DE)

(56) Entgegenhaltungen:
- EP-A- 1 270 695
- WO-A-02/38692

## Beschreibung

Die Erfindung betrifft ein Klebeband und die Verwendung desselben für die Bandagierung von Kabeln im Automobilbereich.

Elektrische und elektromechanische Bauteile sowie die Umhüllungen von elektrischen Leitungen bestehen vielfach aus polymeren Werkstoffen, wobei Polyvinylchlorid (PVC) einen wichtigen Kunststoff darstellt, historisch bedingt aufgrund seiner Verfügbarkeit sowie seiner exzellenten Werkstoff- und Isolationseigenschaften. Insbesondere bestehen Ummantelungen von Kupferadern überwiegend aus PVC oder Polyolefin, sofern nicht Rahmenbedingungen wie Hochtemperaturanforderungen Alternativen erzwingen. Für den mechanischen und elektrischen Schutz derartiger Kabel sind in der Vergangenheit Selbstklebebänder entwickelt worden, die allgemein für den Schutz und zur Isolierung sowie zum Bandagieren von elektrischen Leitungen und Bauteilen in erheblichem Umfang eingesetzt werden. Die Selbstklebebänder erlauben, einen Langzeitverbund herzustellen, ohne dass durch Wechselwirkungen zwischen Klebeband und Kabelumhüllung Schäden an dem Kabel auftreten.

Für spezielle Anwendungen wie das Umwickeln von Leitungssträngen oder Kabelbäumen in Haushaltsgeräten, Maschinen und insbesondere Fahrzeugen sind des weiteren Selbstklebebänder weit verbreitet, die einen textilen Träger, zum Beispiel ein Polyester- oder Zellwoll-Gewebe, besitzen.

Im Rahmen der Diskussionen über die Umweltverträglichkeit von PVC besteht die Tendenz, diesen Werkstoff durch Alternativen zu ersetzen. Elektrische Bau- und Hilfsteile sowie auch die Ummantelung von Kupferkabeln werden verstärkt mit anderen Kunststoffen ausgeführt, wobei für höhere Anforderungen neben Fluorpolymeren und thermoplastischen Elastomeren wie Amitel ® [DSM Engeneering Plastics] oder Hytrel ® [DuPont] überwiegend Polyesterkunststoffe zum Einsatz kommen.

Für den kostensensiblen Massenbereich mit geringeren Temperaturanforderungen finden verstärkt polyolefinische Werkstoffe Verwendung, besonders seit durch die Metallocen-Technologie ähnliche mechanische Eigenschaftsprofile eingestellt werden können wie die von Weich-PVC, wobei die Polyolefine zusätzlich noch per se aufgrund ihrer chemischen Zusammensetzung als reine Kohlenwasserstoffe hervorragende Isolierwirkungen aufweisen.

Auch für Kabelsätze in Fahrzeugen ist die Tendenz zu derartigen PVC-freien Leitungen gegeben, während Bauteile wie Steckverbindungen, Schalter, Rillrohre etc. bereits überwiegend aus PVC-freien Werkstoffen gefertigt werden.

Elektrische Leitungsstränge oder Bauteile, die mit Selbstklebebändern umwickelt sind, müssen eine sichere Funktionsfähigkeit über die gesamte Lebensdauer des Gesamtproduktes, wie zum Beispiel die eines Fahrzeuges, gewährleisten. Bei Auswahl ungeeigneter Klebebänder können sich während des Produktlebens Unverträglichkeiten ergeben, die Schädigungen der Kabel bis hin zu extremer Versprödung nach sich ziehen. Korrosion und Kurzschlüsse mit der Gefahr des Ausfalls der gesamten Elektrik/Elektronik wären die möglichen Folgen. Besonders bei Fahrzeugen wie Personenkraftwagen oder Lastkraftwagen werden an die Verträglichkeit sehr hohe Ansprüche gestellt; im Passagierraum können Spitzentemperaturen bis zu 80 °C auftreten, im Motorraum noch weit höhere Dauertemperaturen.

Deshalb hat sich für den Einsatzbereich der Kabelwickelbänder ein Langzeittest über 3000 Stunden, beispielsweise ein solcher, wie er in der Automobilprüfungsrichtlinie LV 312 beschrieben ist, als Standardprüfung durchgesetzt. Dieser überprüft die Verträglichkeit besonders detailliert.

Musterkabelsätze werden bei den Prüftemperaturen gelagert und nach festgelegten Zeiträumen, meist alle 500 Stunden, um einen Dorn mit definiertem Durchmesser gebogen und anschließend auf Schädigungen untersucht. Dieser Test läuft über eine Gesamtdauer von 3000 Stunden. Neben rein visueller Begutachtung findet teilweise zusätzlich eine elektrische Isolationsprüfung statt. Die Prüftemperaturen richten sich nach den Einsatzbereichen der Kabelsätze und betragen 90 °C bis 150 °C, abhängig von dem Einsatzgebiet des Kabelbaums im Passagier- oder Motorraum. Der LV 312-Test sieht vor, dass für ein Klebeband für den Temperaturbereich T2 eine Verträglichkeit nach 3000 Stunden bei 105 °C gewährleistet werden muss. Da in diesem Temperaturbereich in Europa hauptsächlich Kabel mit PVC-Ummantelung eingesetzt werden, muss auch der Test mit solchen Kabeln durchgeführt werden. In der nächst höheren Temperaturklasse T3 kommen für die Tests Kabel mit Isolierungen aus strahlenvernetztem Polyethylen und Polypropylen zum Einsatz. Getestet wird bei 125 °C. Zusätzlich zu den in LV 312 als Referenzleitungen verwendeten Leitungen bestimmter Hersteller kann der gleiche Test auch an Leitungen durchgeführt werden, die andere internationale Leitungs-Standards erfüllen wie zum Beispiel die SAE J1128 - TXL- oder die SAE J1128 - TWP-Norm in den USA.

Gemäß der Prüfmethode LV 312 werden im Detail folgende Musterkabelsätze hergestellt. Zwei gleiche Adern mit dem Leitungsquerschnitt 0,35 mm² werden mit einer Schlaglänge von ca. 2 cm verdrillt. Die Leitungsbündel werden mit dem zu prüfenden Klebeband (Breite 19 mm) mit ca. 50 % Überlappung schraubenförmig bewickelt.

Als Leitungen werden dabei bei einer Prüftemperatur von 105 °C PVC-Leitungen (Herstellerbezeichnungen: Gebauer & Griller 67218 oder Coroplast 46443) benutzt.

Bei einer Prüftemperatur von 125 °C werden PP-Leitungen der Firma Tyco (Herstellerbezeichnung: AGP 0219) und XPE-Leitungen der Firmen Acome (Herstellerbezeichnung: T4104F) oder der Firma Draka (Herstellerbezeichnung: 971130) benutzt.

Die bewickelten Leitungssätze mit den entsprechenden Referenzleitungen sowie zusätzlich eine unbewickelte Nullprobe werden für die Dauer von 3000 h bei 105 °C beziehungsweise 125 °C freihängend in einen Ofen mit natürlicher Belüftung gelagert. Alle 500 h wird jeweils ein Prüfling entnommen. Der Kabelsatz wird mindestens 3 h, jedoch maximal 48 h bei Prüfklima konditioniert und anschließend wie folgt geprüft:
Ein Leitungssatzabschnitt wird um einen Dorn mit dem Durchmesser 20 mm gewickelt und visuell begutachtet. Dann wird eine Spannungsprüfung nach LV 112 Abschnitt "Messung der 1-Minuten Spannungsfestigkeit" durchgeführt. Danach wird der Prüfling vom Klebeband befreit und aufgedrillt. Dabei muss das Wickelband zunächst ohne offensichtliche Beschädigung der Leitung abgelöst werden können.

Anschließend werden die Einzeladern geprüft. Eine Einzelader wird mindestens zweimal eng um einen Dorn mit dem Durchmesser 2 mm, die andere um einen Dorn mit dem Durchmesser 10 mm gewickelt, visuell begutachtet und jeweils eine Spannungsprüfung durchgeführt.

Bei der Wickelprüfung der Einzeladern um einen 2 mm Dorn dürfen diese keinerlei Risse, Brüche oder Versprödungen aufweisen und nicht aufgequollen oder geschrumpft sein. Eine Verfärbung der Leitung ist zulässig. Die Ursprungsfarbe muss noch erkennbar sein. Ebenfalls dürfen bei der Wicklung um den 10 mm Dorn keinerlei Risse, Brüche oder Versprödungen auftreten und die Adern nicht aufgequollen oder geschrumpft sein.

Bekannt für derartige Kabelwickelanwendungen sind Klebebänder mit einem bandförmigen Träger auf Gewebe oder Nähvliesbasis, wobei Bänder mit einem Nähvliesträger beispielsweise in der DE 94 01 037 U1 beschrieben werden. Als Klebebeschichtung werden bevorzugt druckempfindliche Haftklebebeschichtungen eingesetzt.

Bisher kommen besonders Haftklebmassen auf Basis von Naturkautschuk und Styrolblockcopolymeren zum Einsatz. Dabei zeigen besonders diese Klebmassen auf Basis von Naturkautschuk Schwächen beim Verträglichkeitstest nach LV 312, sowohl auf PVC- als auch auf polyolefinischen Kabelummantelungen. Da Naturkautschuke hauptsächlich aus Lösung verarbeitet werden, ist auch die Produktion dieser Klebebänder teurer als solcher auf Basis eines aus der Schmelze zu verarbeitenden Materials.

Die eingesetzten Klebmassen auf Basis von Styrolblockcopolymeren, die aus der Schmelze ohne Lösungsmittel verarbeitet werden können, erreichen nur selten auf Kabeltypen bestimmter Hersteller eine Verträglichkeit für den Temperaturbereich T2 auf PVC-Kabeln in einem 3000 Stunden-Test bei 105 °C, allerdings nicht auf allen Kabeln, die die entsprechenden Normen erfüllen und für diese Anwendung verwendet werden. Es kommt zu einer Schädigung der Kabelisolierungen, so dass nach dem Wickeln um einen Dorn die Isolierung bricht und das freie Kabel sichtbar wird.

Die Bandbreite der auftretenden Schädigungen reicht von leichten Rissbildungen in den Kabelummantelungen durch Versprödung bis hin zum vollständigen Ausfall durch Zerbröckeln von Bauteilen und Kabelumhüllungen nach längerer Lagerung.

Aufgabe der Erfindung ist es, hier Abhilfe zu schaffen und ein Klebeband insbesondere zur Verwendung als Bandagierungsband für Kabel zur Verfügung zu stellen, wobei das Klebeband eine Haftklebmasse aufweisen soll auf der Basis von Styrolblockcopolymeren, die insbesondere aus der Schmelze verarbeitbar sind.

Die Aufgabe wird gelöst durch ein Klebeband, wie es im Hauptanspruch gezeigt ist. Vorteilhafte Weiterbildungen des Erfindungsgegenstands sowie Verwendungen des Klebebands finden sich in den Unteransprüchen wieder.

Demgemäß betrifft die Erfindung ein Klebeband insbesondere zum Umwickeln von Kabeln aus einem textilen Träger und einer darauf zumindest einseitig beschichteten Klebemasse aus mindestens einem Vinylaromaten-Block-Copolymer und einem zumindest teilhydrierten Klebharz.

Gemäß einer bevorzugten Ausführungsform handelt es sich bei dem Vinylaromaten-Block-Copolymer um ein Styrolblockcopolymer, insbesondere um ein hydriertes Blockcopolymer.

Als Haftklebemassen finden solche auf Basis von Blockcopolymeren enthaltenden Polymerblöcke, gebildet von Vinylaromaten (A-Blöcke) wie zum Beispiel Styrol und solchen gebildet durch Polymerisation von 1,3-Dienen (B-Blöcke) wie zum Beispiel Butadien und Isopren oder einem Copolymer aus beiden, Anwendung. Es können auch Mischungen unterschiedlicher Blockcopolymere zum Einsatz kommen. Bevorzugt werden Produkte eingesetzt, die zum Teil oder vollständig hydriert sind.

Die Blockcopolymere können lineare A-B-A-Struktur aufweisen. Einsetzbar sind ebenfalls Blockcopolymere von radialer Gestalt sowie sternförmige und lineare Multiblockcopolymere. Als weitere Komponente können A-B-Zweiblockcopolymere eingesetzt werden.

Anstelle der Polystyrolblöcke können auch Polymerblöcke auf Basis anderer aromatenhaltiger Homo- und Copolymere (bevorzugt C₈- bis C₁₂-Aromaten) mit Glasübergangstemperaturen von > ca. 75 °C genutzt werden wie zum Beispiel α-methylstyrolhaltige Aromatenblöcke. Gleichfalls sind Polymerblöcke auf Basis von (Meth)acrylathomo- und (Meth)acrylatcopolymeren mit Glasübergangstemperaturen von > +75 °C nutzbar. Hierbei können sowohl Blockcopolymere zum Einsatz kommen, welche als Hartblöcke ausschließlich solche auf Basis von (Meth)acrylatpolymeren nutzen als auch solche, welche sowohl Polyaromatenblöcke, zum Beispiel Polystyrolblöcke, als auch Poly(meth)acrylatblöcke nutzen.

Anstelle von Styrol-Butadien-Blockcopolymeren und Styrol-Isopren-Blockcopolymeren und/oder deren Hydrierungsprodukten, mithin Styrol-Ethylen/Butylen-Blockcopolymere und Styrol-Ethylen/Propylen-Blockcopolymere, können erfindungsgemäß ebenfalls Blockcopolymere und deren Hydrierungsprodukte genutzt werden, welche weitere polydienhaltige Elastomerblöcke nutzen wie zum Beispiel Copolymere mehrerer unterschiedlicher 1,3-Diene. Erfindungsgemäß nutzbar sind des weiteren funktionalisierte Blockcopolymere wie zum Beispiel maleinsäureanhydridmodifizierte oder silanmodifizierte Styrolblockcopolymere.

Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Gemäß einer weiteren bevorzugten Ausführungsform handelt es sich bei dem hydrierten Klebharz um ein hydriertes Kohlenwasserstoffharz.

Als Klebrigmacher dienen Klebharze, die mit dem Elastomerblock der Styrolblockcopolymere verträglich sind und zumindest zum Teil hydriert sind.

Geeignete Klebharze sind unter anderem vorzugsweise partiell oder vollständig hydrierte Harze auf Basis von Kolophonium oder Kolophoniumderivaten. Es können auch zumindest zum Teil hydrierte Kohlenwasserstoffharze zum Beispiel hydrierte Kohlenwasserstoffharze erhalten durch teilweise oder vollständige Hydrierung von aromatenhaltigen Kohlenwasserstoffharzen (zum Beispiel Arkon P und Arkon M Serien der Firma Arakawa oder Regalite-Serie von Eastman), Kohlenwasserstoffharze auf Basis von hydrierten Dicyclopentadien-Polymeren (zum Beispiel Escorez 5300er-Serie von Exxon), Kohlenwasserstoffharze auf Basis von hydrierten C_{5/}C₉-Harzen (Escorez 5600er-Serie von Exxon) oder Kohlenwasserstoffharze auf Basis von hydrierten C₅-Harzen (Eastotac der Firma Eastman) beziehungsweise deren Gemische eingesetzt werden. Auch hydrierte Polyterpenharze auf Basis von Polyterpenen sind verwendbar. Vorgenannte Klebharze können sowohl allein als auch im Gemisch eingesetzt werden.

Als weitere Additive können typischerweise Lichtschutzmittel wie zum Beispiel UV-Absorber, sterisch gehinderte Amine, Antiozonantien, Metalldesaktivatoren, Verarbeitungshilfsmittel, endblockverstärkende Harze eingesetzt werden.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Füllstoffe wie zum Beispiel Siliziumdioxid, Glas (gemahlen oder in Form von Kugeln), Aluminiumoxide, Zinkoxide, Calciumcarbonate, Titandioxide, Ruße, um nur einige zu nennen, ebenso Farbpigmente und Farbstoffe sowie optische Aufheller können ebenfalls Verwendung finden.

Es hat sich gezeigt, dass die Wahl der Alterungsschutzmittel ebenfalls einen beträchtlichen Einfluss auf die Verträglichkeit der Klebmasse mit der Kabelisolierung hat.

Üblicherweise werden styrolblockcopolymerbasierenden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte. Standardmäßig in Haftklebemassen auf Basis von Styrolblockcopolymeren eingesetzte primäre Antioxidantien sind sehr häufig sterisch gehinderte Phenole, welche eine 3-(p-Hydroxyphenyl)-propionsäure Gruppierung oder eine 3-(o-Hydroxyphenyl)-propionsäure Gruppe tragen wie zum Beispiel Irganox 1010, Irganox 1076, Irganox 259, Irganox 1035 und Irganox 1135 der Firma Ciba Additive, Sumilizer BP 101 und Sumilizer BP 76 der Firma Sumitomo oder Hostanox O 10 und Hostanox O 16 der Firma Clariant oder Lowinox PP 35 und Lowinox PO 35 der Firma Chemische Werke Lowi, um nur einige zu nennen.

Als besonders geeignet, die Zerstörung der Kabelisolierungen zu unterdrücken, haben sich Ein- und/oder Mehrkernphenole, die in Ortho- und/oder Parastellung zur phenolischen OH-Gruppe eine Benzylthioethergruppierung enthalten, gezeigt. Bevorzugt geeignet sind 4,6-bis (Octylthiomethyl)-o-Cresol und 4,6-bis(Dodecylthiomethyl)-o-Cresol, Einkernphenole, wie sie zum Beispiel von der Firma Ciba unter dem Markennamen Irganox 1520 beziehungsweise Irganox 1726 angeboten werden.

Diese können idealerweise in Kombination mit sekundären Antioxidantien eingesetzt werden.

Die Herstellung und Verarbeitung der Haftklebemassen kann aus Lösung, Dispersion sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren. Besonders bevorzugt ist die kontinuierliche Fertigung der Haftklebemasse mit Hilfe eines Extruders und anschließender Beschichtung direkt auf das zu beschichtende Substrat bei entsprechend hoher Temperatur der Klebmasse.

Als Trägermaterial können alle bekannten textilen Träger wie eine Schlingenware, ein Velour, ein Gelege, ein Gewebe, ein Gewirke, insbesondere ein PET-Filamentgewebe oder ein Polyamid-Gewebe, oder ein Vlies eingesetzt werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Die durch die Partikelschicht hindurchgenadelten Haltefasern halten die Deckschicht und die Unterlagsschicht in einem Abstand voneinander und sie sind mit der Deckschicht und der Unterlagsschicht verbunden.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Mayer, ehemals Malimo, hergestellt und sind unter anderem bei den Firmen Naue Fasertechnik und Techtex GmbH beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, ein Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Sodann ist das Caliweb® hervorragend geeignet. Das Caliweb® besteht aus einem thermisch fixierten Abstandsvliesstoff Multiknit mit zwei außenliegenden Maschenschichten und einer innenliegenden Polschicht, die senkrecht zu den Maschenschichten angeordnet ist.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Die Verfestigung des Vliesträgers lässt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Als Ausgangsmaterialien für die textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden. Insbesondere verschleißfeste Polymere wie Polyester, Polyolefine, Polyamide oder Glas- oder Carbonfasern finden Verwendung.

Als Trägermaterial eignet sich auch ein Träger aus einem Laminat, in dem zumindest die die Klebemasse tragende Schicht eine textile Schicht ist. Auf dieser Schicht können eine oder weitere Schichten aus beliebigem Material aufgebracht sein zum Beispiel Papier (gekreppt und/oder ungekreppt), Folie (zum Beispiel Polyethylen-, Polypropylen-, mono-oder biaxial orientierte Polypropylenfolien, Polyester-, PA-, PVC- und andere Folien), bahnförmige Schaumstoffe (beispielsweise aus Polyethylen und Polyurethan) sowie die genannten Textilien.

Auf der Streichseite können die Oberflächen der Träger chemisch oder physikalisch vorbehandelt sein, sowie die Rückseite derselben einer antiadhäsiven physikalischen Behandlung oder Beschichtung unterzogen sein.

Das Klebeband wird dadurch gebildet, dass auf den textilen Träger partiell oder vollflächig ein- oder gegebenenfalls beidseitig die Klebemasse aufgetragen wird.

Die Beschichtung kann auch in Form eines oder mehrerer Streifen in Längsrichtung (Maschinenrichtung) erfolgen, gegebenenfalls in Querrichtung, sie ist insbesondere aber vollflächig.

Weiterhin können die Klebemassen rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden.

Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Das erfindungsgemäße Klebeband ist besonders zum Umwickeln von langgestrecktem Gut wie insbesondere Kabeln oder Kabelsätzen geeignet.

Weiter vorzugsweise ist die Verwendung des Klebebands zum Ummanteln von langgestrecktem Gut, wobei das Klebeband in einer offenen oder überlappenden Schraubenlinie um das langgestreckte Gut geführt wird.

Weiter vorzugsweise ist die Verwendung des Klebebands zum Ummanteln von langgestrecktem Gut, wobei das langgestreckte Gut in axialer Richtung von dem Band umhüllt wird.

Überraschenderweise hat sich gezeigt, dass neben den verwendeten Elastomeren insbesondere auch die eingesetzten Klebharze einen entscheidenden Einfluss auf die Verträglichkeiten der Klebmassen mit den Kabelisolierungen haben. Besonders geeignet stellen sich hydrierte Klebharze heraus, hier insbesondere hydrierte KW-Harze.

Insofern wird gemäß einer weiteren vorteilhaften Fortführung der Erfindung das Klebeband zum Ummanteln von langgestrecktem Gut wie insbesondere Kabeln oder Kabelsätzen eingesetzt, wobei das Klebeband bei Verklebung auf Kabeln mit PVC-Ummantelung und auf Kabeln mit Polyolefin-Ummantelung dieselbige nicht zerstört, wenn ein Verbund aus Kabeln und Klebeband gemäß der LV 312, Ausgabe Januar 2006, Abschnitt 5.5, bei Temperaturen über 100 °C und bis zu 3000 h gelagert und anschließend die Kabel um einen Dorn gebogen werden.

Weiter vorzugsweise wird das Klebeband zum Ummanteln von langgestrecktem Gut wie insbesondere Kabeln oder Kabelsätzen eingesetzt, wobei das Klebeband bei Verklebung auf Kabeln mit PVC-Ummantelung und auf Kabeln mit Polyolefin-Ummantelung dieselbige nicht zerstört, wenn ein Verbund aus Kabeln und Klebeband gemäß der LV 312, Ausgabe Januar 2006, Abschnitt 5.5, bei Temperaturen über 125 °C und bis zu 3000 h gelagert und anschließend die Kabel um einen Dorn gebogen werden.

Im Folgenden wird die Erfindung durch einige Beispiele näher erläutert, ohne die Erfindung damit einschränken zu wollen.

### Beispiele

Auf einen textilen Träger vom Typ Polyesterfilamentgewebe mit einem Flächengewicht von 70g/m², welches 32 Fäden pro cm in Kettrichtung und 28 Fäden pro cm in Schussrichtung aufweist, werden mittels Düsenbeschichtung die folgenden Klebmassen aus der Schmelze aufgetragen. Die Temperaturbelastung des Trägers wird mittels einer gekühlten Gegendruckwalze reduziert. Der Masseauftrag beträgt 65 g/m².

Die Angabe der Zusammensetzung der Klebemasse erfolgt jeweils in Gew.-%.

### Beispiel 1

Eine Klebmasse der folgenden Zusammensetzung wird wie oben beschrieben auf den Träger beschichtet.

| | | |
|---|---|---|
| 45,6 % | Vector 4113 | Styrol-Isopren-Styrol-Blockcopolymer der Firma Dexco mit einem Styrolgehalt von 15 Gew.-% und einem Zweiblockgehalt von 20 Gew.-% |
| 44,4 % | Escorez 5600 | Hydriertes KW-Harz der Firma Exxon mit einem Erweichungspunkt von 100 °C |
| 9,5% | Ondina G 41 | medizinisches Weißöl der Firma Shell |
| 0,5% | Irganox 1726 | Antioxidans als Phenol, das in Ortho- und Parastellung zur phenolischen OH-Gruppe eine Benzylthioethergruppierung enthält, der Firma Ciba) |

Das fertige Klebeband wird gemäß LV 312, Ausgabe Januar 2006, Abschnitt 5.5 um ein Kabel mit unterschiedlichen Isolierungen gewickelt und bei entsprechender Temperatur gelagert. Sechs solcher Muster werden für jede Kabelart hergestellt.

| | |
|---|---|
| PVC | 105 °C |
| Vernetztes PE | 125 °C |
| PP | 125 °C |

Alle 500 Stunden wird eines der umwickelten Kabel kontrolliert, das Klebeband wieder abgewickelt und das Kabel um einen Dorn von 10 mm Durchmesser und um einen von 2 mm Durchmesser gewickelt. Es wird untersucht, ob die Isolierung dabei beschädigt wird.

In allen Fällen gibt es keine Beschädigungen der Isolierungen bis zu einer Lagerdauer von 3000 h, wie sie die LV 312 verlangt.

### Beispiel 2

| | | |
|---|---|---|
| 49,8 % | Europrene Sol T 9113 | Styrol-Isopren-Styrol-Blockcopolymer der Firma Polimeri mit einem Styrolgehalt von 18 Gew.-% und einem Zweiblockgehalt von 7 Gew.-%) |
| 46,2 % | Regalite R 1100 | Hydriertes KW-Harz der Firma Eastman mit einem Erweichungspunkt von 100 °C) |
| 3,5 % | Ondina G 41 | |
| 0,5 % | Irganox 1726 | |

Wieder sind alle kontrollierten Kabelisolierungen unverändert.

### Beispiel 3

| | | |
|---|---|---|
| 48,2 % | Kraton G 1657 | Styrol-Ethylen/Butylen-Styrol-Blockcopolymer der Firma Kraton mit 13 Gew.-% Styrol und 36 Gew.-% Zweiblockgehalt |
| 45,6 % | Arkon P 90 | Hydriertes KW Harz der Firma Arakawa mit einem Erweichungspunkt von 90 °C |
| 5,7 % | Escorez 5040 | Flüssiges KW Harz der Firma Exxon |
| 0,5 % | Irganox 1010 | Phenolisches primäres Antioxidans der Firma Ciba |

Auch hier sind wie bei den vorigen Beispielen die Kabelisolierungen nach 3000 Stunden Lagerung intakt.

### Gegenbeispiel 4

| | | |
|---|---|---|
| 45,6 % | Vector 4113 | |
| 44,4 % | Escorez 1310 | Nicht-hydriertes KW-Harz der Firma Exxon mit einem Erweichungspunkt von 90 °C |
| 9,5 % | Ondina G 41 | |
| 0,5 % | Irganox 1726 | |

Die PVC-Kabel zeigen die ersten Risse schon nach 500 Stunden Lagerung, die PE und PP-Isolierungen bereits nach 1000 Stunden.

## Patentansprüche

1. Klebeband insbesondere zum Umwickeln von Kabeln aus einem textilen Träger und einer darauf zumindest einseitig beschichteten Klebemasse aus mindestens einem Vinylaromaten-Block-Copolymer und einem zumindest teilhydrierten Klebharz **dadurch gekennzeichnet, dass**
in der Klebmasse zumindest ein Alterungsschutzmittel eingesetzt wird aus der Gruppe der Ein- und/oder Mehrkernphenole, die in Ortho- und/oder Parastellung zur phenolischen OH-Gruppe eine Benzylthioethergruppierung enthalten.

2. Klebeband nach Anspruch 1, **dadurch gekennzeichnet, dass**
es sich bei dem Vinylaromaten-Block-Copolymer um ein Styrolblockcopolyrner handelt, insbesondere um ein hydriertes Blockcopolymer.

3. Klebeband nach Anspruch 1 oder 2, **dadurch gekennzeichnet, dass**
das Vinylaromaten-Block-Copolymer ein Styrol-Butadien-Blockcopolymer, Styrol-Isopren-Blockcopolymer und/oder ein Hydrierungsprodukt der vorgenannten Blockcopolymere ist.

4. Klebeband nach zumindest einem der Ansprüche 1 bis 3, **dadurch gekennzeichnet, dass**
es sich bei dem hydrierten Klebharz um ein hydriertes Kohlenwasserstoffharz handelt.

5. Klebeband nach zumindest einem der vorherigen Ansprüche, **dadurch gekennzeichnet, dass**
die Klebharze gewählt werden aus der Gruppe
vorzugsweise partiell oder vollständig hydrierte Harze auf Basis von Kolophonium oder Kolophoniumderivaten,
zumindest zum Teil hydrierte Kohlenwasserstoffharze wie hydrierte Kohlenwasserstoffharze erhalten durch teilweise oder vollständige Hydrierung von aromatenhaltigen Kohlenwasserstoffharzen,
Kohlenwasserstoffharze auf Basis von hydrierten Dicyclopentadien-Polymeren, Kohlenwasserstoffharze auf Basis von hydrierten C₅/C₉-Harzen,
Kohlenwasserstoffharze auf Basis von hydrierten C₅-Harzen,
hydrierte Polyterpenharze auf Basis von Polyterpenen
und/oder deren Gemische.

6. Klebeband nach Anspruch 1, **dadurch gekennzeichnet, dass**
es sich bei dem Alterungsschutzmittel um 4,6-bis-(Octylthiomethyl)-o-Cresol oder 4,6-bis-(Dodecyl-thiomethyl)-o-Cresol handelt.

7. Klebeband nach zumindest einem der vorhergehenden Ansprüche, **dadurch gekennzeichnet, dass**
die Klebmasse aus der Schmelze verarbeitet wird.

8. Verwendung eines Klebebandes nach mindestens einem der vorherigen Ansprüche zum Umwickeln von langgestrecktem Gut wie insbesondere Kabeln oder Kabelsätzen.

9. Verwendung eines Klebebandes nach zumindest einem der vorherigen Ansprüche zum Ummanteln von langgestrecktem Gut, wobei das Klebeband in einer Schraubenlinie um das langgestreckte Gut geführt wird.

10. Verwendung eines Klebebandes nach zumindest einem der vorherigen Ansprüche zum Ummanteln von langgestrecktem Gut, wobei das langgestreckte Gut in axialer Richtung von dem Band umhüllt wird.

## Claims

1. Adhesive tape intended more particularly for wrapping cables, comprising a textile backing and, coated on at least one side thereof, an adhesive comprising at least one vinylaromatic block copolymer and an at least partly hydrogenated tackifier resin, **characterized in that** in the adhesive at least one ageing inhibitor is used from the group consisting of mononuclear and/or polynuclear phenols which contain a benzyl thioether moiety positioned ortho and/or para to the phenolic OH group.

2. Adhesive tape according to Claim 1, **characterized in that**
the vinylaromatic block copolymer is a styrene block copolymer, more particularly a hydrogenated block copolymer.

3. Adhesive tape according to Claim 1 or 2, **characterized in that**
the vinylaromatic block copolymer is a styrenebutadiene block copolymer, a styrene-isoprene block copolymer and/or a hydrogenation product of the aforementioned block copolymers.

4. Adhesive tape according to at least one of Claims 1 to 3, **characterized in that** the hydrogenated tackifier resin is a hydrogenated hydrocarbon resin.

5. Adhesive tape according to at least one of the preceding claims, **characterized in that** the tackifier resins are selected from the group consisting of
preferably partially or fully hydrogenated resins based on rosin or on rosin derivatives,
at least partly hydrogenated hydrocarbon resins such as hydrogenated hydrocarbon resins obtained by partial or full hydrogenation of aromatic-containing hydrocarbon resins,
hydrocarbon resins based on hydrogenated dicyclopentadiene polymers,
hydrocarbon resins based on hydrogenated C5/C9 resins,
hydrocarbon resins based on hydrogenated C5 resins,
hydrogenated polyterpene resins based on polyterpenes
and/or mixtures thereof.

6. Adhesive tape according to Claim 1, **characterized in that**
the ageing inhibitor is 4,6-bis(octylthiomethyl)-o-cresol or 4,6-bis(dodecylthiomethyl)-o-cresol.

7. Adhesive tape according to at least one of the preceding claims, **characterized in that** the adhesive is processed from the melt.

8. Use of an adhesive tape according to at least one of the preceding claims for wrapping elongate material such as, more particularly, cables or cable harnesses.

9. Use of an adhesive tape according to at least one of the preceding claims for wrapping elongate material, the adhesive tape being passed in a helical line around the elongate material.

10. Use of an adhesive tape according to at least one of the preceding claims for wrapping elongate material, the elongate material being enveloped in axial direction by the tape.

## Revendications

1. Bande adhésive, en particulier pour envelopper des câbles, constituée par un support textile et une masse adhésive appliquée sur au moins une face dudit support, constituée par au moins un copolymère à blocs d'aromatiques de vinyle et au moins une résine adhésive partiellement hydrogénée, **caractérisée en ce qu'**on utilise dans la masse adhésive au moins un agent de protection contre le vieillissement du groupe des phénols à un et/ou à plusieurs noyaux, qui contiennent un groupe benzylthioéther en position ortho et/ou para par rapport au groupe OH phénolique.

2. Bande adhésive selon la revendication 1, **caractérisée en ce qu'**il s'agit, pour le copolymère à blocs d'aromatiques de vinyle, d'un copolymère à blocs de styrène, en particulier d'un copolymère à blocs hydrogéné.

3. Bande adhésive selon la revendication 1 ou 2, **caractérisée en ce que** le copolymère à blocs d'aromatiques de vinyle est un copolymère à blocs de styrène-butadiène, un copolymère à blocs de styrène-isoprène et/ou un produit d'hydrogénation des copolymères à blocs susmentionnés.

4. Bande adhésive selon au moins l'une quelconque des revendications 1 à 3, **caractérisée en ce qu'**il s'agit pour la résine adhésive hydrogénée d'une résine hydrocarbonée hydrogénée.

5. Bande adhésive selon au moins l'une quelconque des revendications précédentes, **caractérisée en ce que** les résines adhésives sont choisies dans le groupe formé par
les résines de préférence partiellement ou totalement hydrogénées à base de colophonium ou de dérivés de colophonium,
les résines hydrocarbonées au moins partiellement hydrogénées telles que les résines hydrocarbonées hydrogénées obtenues par une hydrogénation partielle ou complète de résines hydrocarbonées contenant des aromatiques,
les résines hydrocarbonées à base de polymères de dicyclopentadiène hydrogénés,
les résines hydrocarbonées à base de résines en C₅/C₉ hydrogénées,
les résines hydrocarbonées à base de résines en C₅ hydrogénées,
les résines polyterpéniques hydrogénées à base de polyterpènes et/ou leurs mélanges.

6. Bande adhésive selon la revendication 1, **caractérisée en ce qu'**il s'agit, pour l'agent de protection contre le vieillissement, de 4,6-bis-(octylthiométhyl)-o-crésol ou de 4,6-bis-(dodécylthiométhyl)-o-crésol.

7. Bande adhésive selon au moins l'une quelconque des revendications précédentes, **caractérisée en ce que** la masse adhésive est transformée à partir de la masse fondue.

8. Utilisation d'une bande adhésive selon au moins l'une quelconque des revendications précédentes pour envelopper des produits allongés tels qu'en particulier des câbles ou des jeux de câbles.

9. Utilisation d'une bande adhésive selon au moins l'une quelconque des revendications précédentes, pour envelopper un produit allongé, la bande adhésive étant guidée en une ligne hélicoïdale autour du produit allongé.

10. Utilisation d'une bande adhésive selon au moins l'une quelconque des revendications précédentes, pour envelopper un produit allongé, le produit allongé étant enveloppé dans le sens axial par la bande.
